# EUROPÄISCHE PATENTSCHRIFT

(11) **EP 2 635 448 B1**
(45) Veröffentlichungstag und Bekanntmachung des Hinweises auf die Patenterteilung: **15.11.2017**
(21) Anmeldenummer: 11761518.7
(22) Anmeldetag: 24.09.2011
(51) Int. Cl.: F16F 1/32, F16F 9/54, B60G 15/06

(54) **DÄMPFERLAGER ZUR ABSTÜTZUNG EINER FAHRWERKSKOMPONENTE AN EINER KRAFTFAHRZEUGKAROSSERIE**
DAMPER BEARING FOR SUPPORTING A CHASSIS COMPONENT ON A MOTOR VEHICLE BODY
PALIER AMORTISSEUR POUR LE SOUTIEN D'UN ÉLÉMENT DE CHÂSSIS SUR UNE CARROSSERIE DE VÉHICULE AUTOMOBILE

(30) Priorität: 03.11.2010 DE 102010050289
(43) Veröffentlichungstag der Anmeldung: 11.09.2013
(73) Patentinhaber: Audi AG, 85045 Ingolstadt (DE)
(72) Erfinder: BARMA, Michael, 33181 Bad Wünnenberg (DE)
(86) Internationale Anmeldenummer: PCT/EP2011/004788
(87) Internationale Veröffentlichungsnummer: WO 2012/059157

(56) Entgegenhaltungen:
- EP-A1- 1 650 469
- DE-A1- 10 039 763
- DE-A1- 10 332 801
- DE-A1-102007 012 070
- DE-A1-102007 046 292

## Beschreibung

Die Erfindung betrifft ein Dämpferlager zur Abstützung einer Fahrwerkskomponente an einer Kraftfahrzeugkarosserie gemäß der Oberbegriff des Anspruchs 1 angegebenen Art.

Derartige Dämpferlager sind in vielerlei Ausgestaltungsformen bekannt und werden beispielsweise in Radaufhängungen von Kraftfahrzeugen eingesetzt. Üblicherweise verbinden sie einen Stoßdämpfer oder auch ein Federbein, das einen Stoßdämpfer umfasst, mit der Karosserie des Kraftfahrzeugs. Neben der Abstützfunktion soll das Dämpferlager vor allem auch für eine akustische Entkoppelung und Dämpfung sorgen.

Ein gattungsgemäßes, sämtliche Merkmale des Oberbegriffs des Anspruchs 1 aufweisendes Dämpferlager ist beispielsweise in der DE 101 47 604 A1 offenbart. Als nachteilig erweist sich hierbei insbesondere der Umstand, dass das Lager verhältnismäßig viel Bauraum benötigt und einen geringen kardanischen Versatz zulässt. Ein ähnliches Dämpferlager mit erhöhter Elastizität ist aus der DE 10 007 046 292 A1 bekannt. Der Erfindung liegt die Aufgabe zu Grunde, ein Dämpferlager zur Abstützung einer Fahrwerkskomponente an einer Kraftfahrzeugkarosserie gemäß der im Oberbegriff des Anspruches 1 angegebenen Art unter Vermeidung der genannten Nachteile derart weiterzubilden, dass das Lager weniger Bauraum beansprucht und bei dem der kardanische Versatz weitestgehend variabel ist.

Diese Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

In bekannter Art und Weise umfasst das Dämpferlager zur Abstützung einer Fahrwerkskomponente an einer Kraftfahrzeugkarosserie ein erstes Lagerelement, über das das Lager an der Kraftfahrzeugkarosserie festgelegt ist, und ein zweites Lagerelement, welches mit der Fahrwerkskomponente fest verbunden ist. Zwischen den beiden Lagerelementen ist ein Dämpfungselement aus einem stoßdämpfendend Material angeordnet.

Erfindungsgemäß ist das erste Lagerelement als eine Tellerfeder - erste Tellerfeder - ausgebildet, während das Dämpfungselement eine scheibenförmige Grundform aufweist in das das zweite Lagerelement einvulkanisiert ist.

In vorteilhafter Weise ist nunmehr ein Dämpferlager zur Verfügung gestellt, welches aufgrund der Verwendung der Tellerfeder, des scheibenförmigen Dämpfungselements sowie der Einvulkanisierung des zweiten Lagerelements in das scheibenförmige Dämpfungselement klein baut und damit eine geringe Bauraumhöhe benötigt.

Vorzugsweise weisen die erste Tellerfeder sowie das in das das scheibenförmige Dämpfungselement einvulkanisierte zweite Lagerelement jeweils eine zentrale Durchgangsöffnung auf. Dies hat den Effekt, dass eine einfache Montage gewährleistet ist, nämlich mittels eines einfachen Aufschiebens der beiden Lagerelemente auf die Fahrwerkskomponete und einer anschließenden Verschraubung des Lagers mit einer Mutter gegen einen an der Fahrwerkskomponente ausgebildeten Anschlag. Neben der schnellen Montage ist entsprechend eine schnelle Demontage gewährleistet. D.h., dass z.B. bei Abstimmungsfahrten oder Tuning eine schnelle Auswechselbarkeit des Lagers bzw. der ersten Tellerfeder ermöglicht ist.

Gemäß einer Ausführungsform der Erfindung ist in axialer Richtung betrachtet unterhalb des zweiten Lagerelements ein weiteres, drittes Lagerelement angeordnet. Das dritte Lagerelement ist dabei wiederum als eine Tellerfeder - zweite Tellerfeder - ausgebildet und weist entsprechend zu dem ersten und zweiten Lagerelement eine zentrale Durchgangsöffnung auf. Hierdurch ist in vorteilhafter Weise die axiale Steifigkeit des Lagers einstellbar. Neben der Verwendung einer zweiten Tellerfeder zur Einstellung bzw. Erhöhung der axialen Steifigkeit des Lagers, ist eine Einstellung verschiedener axialer Steifigkeit auch durch eine Variation der Blechstärke und/oder Variation bzgl. der Geometriegestaltung der ersten und/oder zweiten Tellerfeder möglich.

Vorzugsweise ist die zweite Tellerfeder topfförmig ausgebildet. Die topfförmige Ausgestaltung ermöglicht in vorteilhafter Weise z.B. eine bauraumsparende Aufnahme einer Schraubenfeder.

Gemäß einer besonders vorteilhaften Ausführungsform der Erfindung weist die erste Tellerfeder und die zweite Tellerfeder ausgehend von der zentralen Durchgangsöffnung gesehen, radial nach außen verlaufende schlitzförmige Ausnehmungen auf. Aufgrund der Ausbildung dieser schlitzförmigen Ausnehmungen in der ersten und zweiten Tellerfeder, sind in diesen eine Vielzahl von einzelnen Biegefedern ausgebildet. Hierdurch ist in vorteilhafter Weise ein hoher kardanischer Versatz bei geringer kardanischer Steifigkeit ermöglicht, da bei einem kardanischen Versatz nur ein Teil der Biegefedern auf Biegung beansprucht werden.
Über eine entsprechende Dimensionierung/Anordnung der schlitzförmigen Ausnehmungen ist eine Einstellung der kardinischen Steifigkeit ermöglicht. So ist gemäß einer Ausführungsform eine über den Umfang der erste und/oder zweiten Tellerfeder symmetrische Verteilung der schlitzförmigen Ausnehmungen vorgesehen. Gemäß einer anderen Ausführungsform sind die schlitzförmigen Ausnehmungen über den Umfang der ersten und/oder zweiten Tellerfeder unsymmetrisch verteilt angeordnet.
Weitere Vorteile, Merkmale und Anwendungsmöglichkeiten der vorliegenden Erfindung ergeben sich aus der nachfolgenden Beschreibung in Verbindung mit dem in den Zeichnungen dargestellten Ausführungsbeispiel.

Die Erfindung wird im folgenden an Hand des in der Zeichnung dargestellten Ausführungsbeispiels näher beschrieben.

In der Beschreibung, in den Ansprüchen und in der Zeichnung werden die in der unten aufgeführten Liste der Bezugzeichen verwendeten Begriffe und zugeordneten Bezugzeichen verwendet.

In der Zeichnung bedeutet:
- Fig. 1: eine Explosionsdarstellung des erfindungsgemäßen Dämpferlagers, und
- Fig. 2: eine Detailansicht des oberen Federtellers.

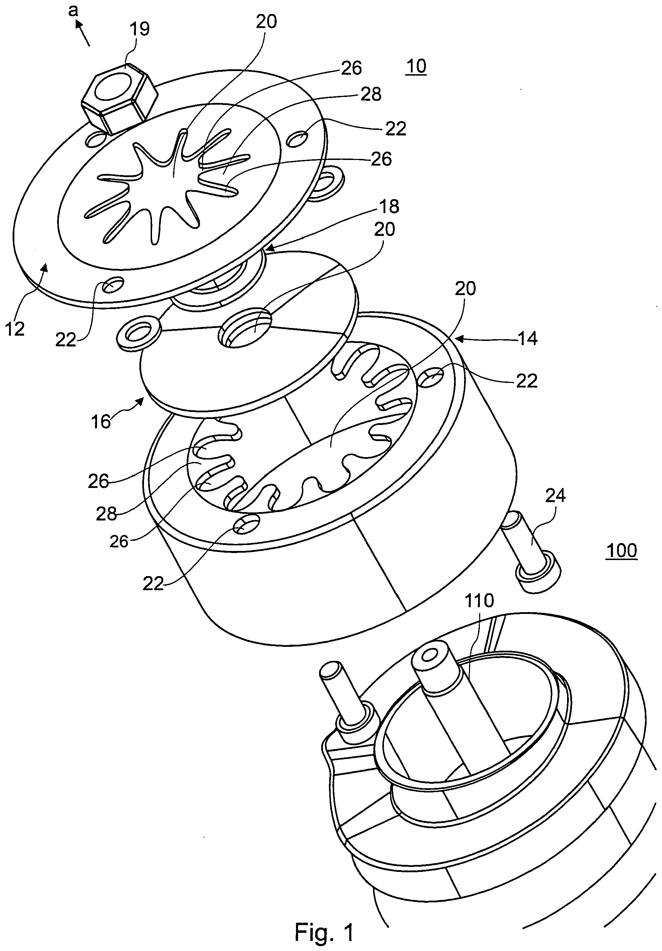

Fig. 1 zeigt mehr oder minder schematisch in einer Explosionsdarstellung ein insgesamt mit der Bezugsziffer 10 bezeichnetes Dämpferlager sowie ein insgesamt mit der Bezugsziffer 100 bezeichnetes Dämpfermodul 100.

Das Dämpferlager 10 umfasst eine obere, erste Tellerfeder 12 sowie eine untere, zweite Tellerfeder 14. Zwischen der oberen Tellerfeder 12 und der unteren Tellerfeder 14 ist ein scheibenförmiges Dämpfungselement 16 aus einem stoßdämpfenden Werkstoff angeordnet. Die untere zweite Tellerfeder 14 ist mit einem Topfgehäuse ausgestattet und bildet so die Auflage für die Schraubenfeder des Dämpfermoduls 100.

Weiterhin weist das Dämpferlager 10 ein zweites Lagerelement 18 auf. Über das Lagerelement 18 ist eine Befestigung des Lagers 10 an eine Kolbenstange 110 des Dämpfermoduls 100 ermöglicht. Das zweite Lagerelement 18 ist lediglich aufgrund der Explosionsdarstellung sichtbar; im verbauten Zustand ist zweite Lagerelement 18 in des Dämpfungselement 18 einvulkanisiert.

Wie Fig. 1 weiter zu entnehmen ist, weisen die beiden Tellerfedern 12, 14 sowie das - im verbauten Zustand in das Dämpfungselement 16 einvulkanisierte - zweite Lagerelement 18 jeweils eine zentrale Durchgangsöffnung 20 auf, die ein einfaches Aufschieben der Bauteile 12, 14, 16, 18 gegen einen an der Kolbenstange 110 ausgebildeten Anschlag und eine Verschraubung gegen diesen mittels einer Mutter 19 erlaubt.

Für eine Befestigung an der, hier aus Gründen der Übersichtlichkeit nicht dargestellten, Fahrzeugkarosserie weisen der obere Federteller 12 sowie der untere Federteller 14 fluchtend zueinander angeordnete Bohrungen 22 auf, über die mittels Schrauben 24 eine Verschraubung an der Fahrzeugkarosserie ermöglicht ist.

Wie Fig. 1 weiter zu entnehmen ist, weisen der obere Federteller 12 sowie der untere Federteller 14 jeweils ausgehend von der Durchgangsöffnung 20 aus betrachtet radial nach außen ausgerichtete schlitzförmige Ausnehmungen 26 auf. Die schlitzförmigen Ausnehmungen 26 sind gleichmäßig über den Umfang der Tellerfeder verteilt und bilden in der jeweiligen Oberfläche eine Vielzahl von Biegefedern 28.

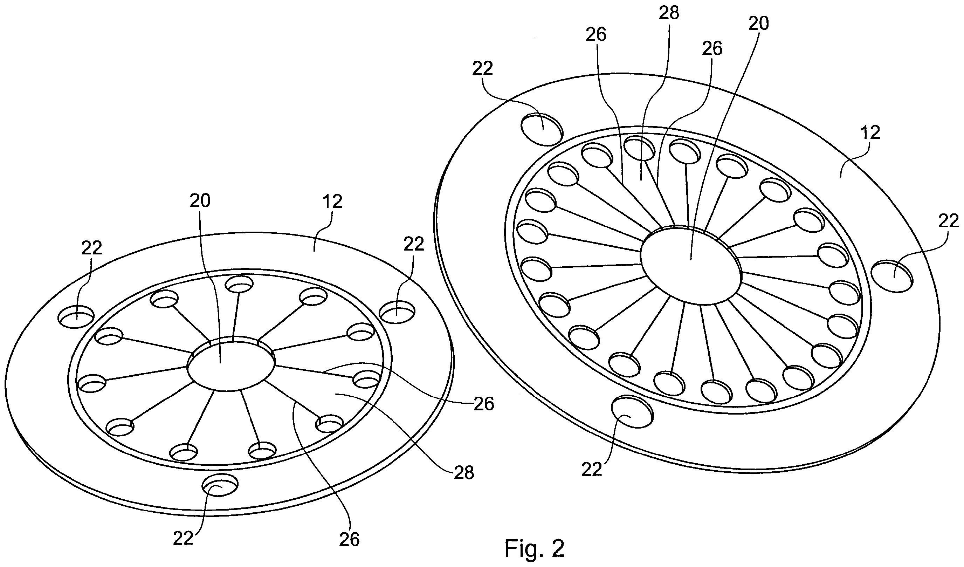

Fig. 2 zeigt in einer Detailansicht den oberen Federteller 12 in zwei weiteren Ausführungsformen. Im Gegensatz zu dem in Fig. 1 dargestellten, sind bei diesen Ausführungsformen die schlitzförmigen Ausnehmungen 26 schmaler ausgebildet. Über die gewählte Anzahl der schlitzförmigen Ausnehmungen 26 und/oder die Breite der schlitzförmigen Ausnehmungen 26 ist ein Einstellung der axialen Federsteifigkeit ermöglicht. Dies gilt sinngemäß auch für die zweite Tellerfeder 14. Eine weitere Möglichkeit zur Einstellung der Federhärte ist beispielsweise über eine entsprechende Materialwahl und/oder Materialdicke ermöglicht.

Die Funktion des Dämpferlagers 10 wird nachfolgend kurz erläutert: Bei einer Bewegung der Kolbenstange 110 in axiale Richtung a (Einfedern) wird das zweite Lagerelement 18 in dem Dämpfungselement 16 nach oben verschoben. Dabei ist das Dämpfungselement 16 zwischen dem ersten Federteller 12 und dem zweiten Lagerelement 18 im Überlappungsbereich der beiden Bauteile eingequetscht. Nachdem die Quetschbeanspruchung des Dämpfungselement 16 so groß ist, dass der inkompressible Werkstoff nicht weiter ausweichen kann, übernimmt die Biegesteifigkeit der Tellerfedern 12, 14 die Federwirkung. Die Tellerfedern 12, 14 biegen sich bei konzentrischer Belastung gleichmäßig nach oben und erreichen so ein sehr hohe Steifigkeit. Die fahrdynamische Anforderung den kardanischen Versatz so weich wie möglich zu gestalten, wird dadurch erreicht, dass bei kardanischen Versatz nur ein Teil der Biegefedern 28 Widerstand bieten und die Lagersteifigkeit stark abnimmt.

Weiterführend kann sogar, nachdem der genaue Winkel der kardanischen Auslenkung in einem Mehrkörpersimulationstool, z.B. MSC ADAMS, bestimmt wurde, in dieser Richtung auf die Biegefeder verzichtet werden. So steht immer noch genügend radiale und axiale Steifigkeit zur Verfügung, mit dem positiven Nebeneffekt der geringen kardanischen Steifigkeit.

Bei Zugbelastung der Kolbenstange (Ausfedern) findet keine Überlappung der Biegefedern statt. Diese Kräfte werde über das Dämpfungselement 16 aufgenommen, welches in diesem Belastungsfall auf Schubbelastung beansprucht wird.

### Bezugszeichenliste

- 10: Dämpferlager
- 12: erste Tellerfeder
- 14: zweite Tellerfeder
- 16: Dämpfungselement
- 18: zweites Lagerelement
- 19: Mutter
- 20: Durchgangsöffnung
- 22: Bohrung
- 24: Schrauben
- 26: Ausnehmung
- 28: Biegefeder
- 100: Dämpfermodul
- 110: Kolbenstange

- a: axiale Richtung

## Patentansprüche

1. Dämpferlager (10) zur Abstützung einer-Fahrwerkskomponente an einer Kraftfahrzeugkarosserie, umfassend
- ein erstes Lagerelement (12) zur Befestigung an der Fahrzeugkarosserie;
- ein zweites Lagerelement (18) zur Befestigung an der Fahrwerkskomponente (110), und
- ein zwischen dem ersten und zweiten Lagerelement (12, 18) angeordnetes Dämpfungselement (16) aus einem stoßdämpfenden Werkstoff,
wobei das erste Lagerelement (12) als eine Tellerfeder - erste Tellerfeder - ausgebildet ist und das Dämpfungselement (16) eine scheibenförmige Grundform aufweist, und dass das zweite Lagerelement (18) in das scheibenförmige Dämpfungselement (16) einvulkanisiert ist, **dadurch gekennzeichnet, dass** die erste Tellerfeder (12) ausgehend von der zentralen Durchgangsöffnung (20) radial nach außen verlaufende schlitzförmige Ausnehmungen (26) aufweist.

2. Dämpferlager nach Anspruch 1, **dadurch gekennzeichnet, dass** die erste Tellerfeder (12) und das in das scheibenförmige Dämpfungselement (16) einvulkanisierte zweite Lagerelement (18) jeweils eine zentrale Durchgangsöffnung (20) aufweisen.

3. Dämpferlager nach Anspruch 1 oder 2, **dadurch gekennzeichnet, dass** in axiale Richtung a betrachtet unterhalb des zweiten Lagerelements (18) ein eine zentrale Durchgangsöffnung (20) aufweisendes drittes Lagerelement (14) in Form einer Tellerfeder - zweite Tellerfeder - angeordnet ist.

4. Dämpferlager nach Anspruch 3, **dadurch gekennzeichnet, dass** die zweite Tellerfeder (14) topfförmig ausgebildet ist.

5. Dämpferlager nach einem der vorgenannten Ansprüche, **dadurch gekennzeichnet, dass** die zweite Tellerfeder (14) ausgehend von der zentralen Durchgangsöffnung (20) radial nach außen verlaufende schlitzförmige Ausnehmungen (26) aufweist.

6. Dämpferlager nach Anspruch 5, **dadurch gekennzeichnet, dass** die schlitzförmigen Ausnehmungen (26) über den Umfang der ersten und/oder zweiten Tellerfeder (12, 14) unsymmetrisch verteilt angeordnet sind.

7. Dämpferlager nach Anspruch 5, **dadurch gekennzeichnet, dass** die schlitzförmigen Ausnehmungen (26) über den Umfang der ersten und/oder zweiten Tellerfeder (12, 14) unsymmetrisch verteilt angeordnet sind.

## Claims

1. Damper bearing (10) for supporting a chassis component on a motor vehicle body, comprising
- a first bearing element (12) for attachment to the vehicle body;
- a second bearing element (18) for attachment to the motor vehicle component (110), and
- a damping element (16) of a shock-absorbing material arranged between the first and second bearing elements (12, 18), wherein the first bearing element (12) is formed as a disc spring - first disc spring - and the damping element (16) has a disc-shaped basic form, and the second bearing element (18) is vulcanised into the disc-shaped damping element (16), **characterised in that** the first disc spring (12) has slit-shaped recesses (26) extending radially outwardly from the central through opening (20).

2. Damper bearing according to claim 1, **characterised in that** the first disc spring (12) and the second bearing element (18) vulcanised into the disc-shaped damping element (16) respectively comprise a central through opening (20).

3. Damper bearing according to claim 1 or 2, **characterised in that** viewed in the axial direction "a" a third bearing element (14) in the form of a disc spring - second disc spring - and having a central through opening (20) is arranged underneath the second bearing element (18).

4. Damper bearing according to claim 3, **characterised in that** the second disc spring (14) is shaped in the form of a cup.

5. Damper bearing according to any one of the preceding claims, **characterised in that** the second disc spring (14) has radially outwardly extending slit-shaped recesses (26) starting from the central through opening (20).

6. Damper bearing according to claim 5, **characterised in that** the slit-shaped recesses (26) are arranged distributed unsymmetrically about the circumference of the first and/or second disc spring (12, 14).

7. Damper bearing according to claim 5, **characterised in that** the slit-shaped recesses (26) are arranged distributed unsymmetrically about the circumference of the first and/or second disc spring (12, 14).

## Revendications

1. Palier amortisseur (10) destiné à supporter un élément de châssis au niveau d'une carrosserie de véhicule automobile, comprenant
- un premier élément de palier (12) destiné à la fixation à la carrosserie de véhicule;
- un deuxième élément de palier (18) destiné à la fixation à l'élément de châssis (110), et
- un élément amortisseur (16), en un matériau amortissant les chocs, agencé entre le premier et le deuxième élément de palier (12, 18),
dans lequel le premier élément de palier (12) est conçu comme un ressort à disques - premier ressort à disques - et l'élément amortisseur (16) présente une forme fondamentale de disque
et dans lequel le deuxième élément de palier (18) est vulcanisé dans l'élément amortisseur (16) en forme de disque,
**caractérisé en ce que** le premier ressort à disques (12) comporte des évidements (26) en forme de fentes qui s'étendent de façon radiale vers l'extérieur à partir de l'ouverture de passage centrale (20).

2. Palier amortisseur selon la revendication 1, **caractérisé en ce que** le premier ressort à disques (12) et le deuxième élément de palier (18) vulcanisé dans l'élément amortisseur (16) en forme de disque présentent chacun une ouverture de passage centrale (20).

3. Palier amortisseur selon la revendication 1 ou 2, **caractérisé en ce qu'**un troisième élément de palier (14) qui comporte une ouverture de passage centrale (20) et qui se présente sous la forme d'un ressort à disques - deuxième ressort à disques - est agencé, vu dans la direction axiale a, au-dessous du deuxième élément de palier (18).

4. Palier amortisseur selon la revendication 3, **caractérisé en ce que** le deuxième ressort à disques (14) est conçu en forme de coupelle.

5. Palier amortisseur selon l'une des revendications précédentes, **caractérisé en ce que** le deuxième ressort à disques (14) comporte des évidements (26) en forme de fentes qui s'étendent de façon radiale vers l'extérieur à partir de l'ouverture de passage centrale (20).

6. Palier amortisseur selon la revendication 5, **caractérisé en ce que** les évidements (26) en forme de fentes sont agencés de manière répartie non symétriquement sur la circonférence du premier et/ou deuxième ressort à disques (12, 14).

7. Palier amortisseur selon la revendication 5, **caractérisé en ce que** les évidements (26) en forme de fentes sont agencés de manière répartie non symétriquement sur la circonférence du premier et/ou deuxième ressort à disques (12, 14).
